# EUROPÄISCHE PATENTANMELDUNG

(11) **EP 4 650 032 A1**
(43) Veröffentlichungstag der Anmeldung: **19.11.2025**
(21) Anmeldenummer: 25160850.1
(22) Anmeldetag: 28.02.2025
(51) Int. Cl.: B01D 53/06, B01D 53/26, B01D 53/28, B01D 53/04

(54) **VORRICHTUNG UND VERFAHREN ZUR GEWINNUNG VON KOHLENDIOXID MIT EINER ROTIERBAREN SORPTIONSEINHEIT**

(30) Priorität: 04.03.2024 DE 102024106169
(71) Anmelder: VOLKSWAGEN AG, 38440 Wolfsburg (DE)
(72) Erfinder: Kawelke, Peter, 38442 Wolfsburg (DE); Hofer, Martin, 38118 Braunschweig (DE); Wiegel, Marcel, 39649 Gardelegen (DE); Heimermann, Christian, 38442 Wolfsburg (DE)
(74) Vertreter: MFG Patentanwälte Meyer-Wildhagen Meggle-Freund Gerhard PartG mbB

(57) **Zusammenfassung**

Vorliegend wird eine Vorrichtung zur Gewinnung von Kohlendioxid aus einem gasförmigen Medium umfassend einen ersten Luftströmungskanal für ein getrocknetes gasförmige Medium, einen zweiten Luftströmungskanal für Abluft, mindestens eine rotierbare Sorptionseinheit umfassend mindestens ein Sorptionsmittel zur Physisorption von Kohlendioxid beschrieben, wobei die mindestens eine rotierbare Sorptionseinheit von dem ersten Luftströmungskanal angesteuert wird und der zweite Luftströmungskanal die Abluft aus der rotierenden Sorptionseinheit abführt. Ferner werden ein Verfahren zur Gewinnung von Kohlendioxid sowie die Verwendung der Vorrichtung und des Verfahrens offenbart.

## Beschreibung

Die Erfindung betrifft eine Vorrichtung zur Gewinnung von Kohlendioxid, ein Verfahren zur Gewinnung von Kohlendioxid und die Verwendung der Vorrichtung und des Verfahrens zur Gewinnung von Kohlendioxid.

Die Emission von Kohlendioxid in die Atmosphäre gilt aktuell als wesentlicher Treiber des Klimawandels. Kohlenstoffabscheidungs- und Speichertechniken (Carbon capture and storage - CCS) sind effiziente und effektive Methoden zur Reduzierung der Kohlendioxidemissionen in die Atmosphäre.

Bekannte Verfahren zum Einfangen von Kohlendioxid sind Absorption, Adsorption, Membranbasierte Systeme, elektrochemische Separation und kryogene Trennung.

Ein weiteres Verfahren zum Einfangen von Kohlendioxid aus der Luft ist das Direct Air Capture (DAC)-Verfahren. Dabei wird Kohlendioxid mittels eines geeigneten Sorptionsmittels aus der Luft sorbiert und kann für weitere Anwendungen eingesetzt werden.

In der WO2016/005226A1, WO2015/185434A1 und WO2014/170184A1 werden beispielhafte Verfahren zur Gewinnung von Kohlendioxid mit einem Chemisorbenten nach einem Temperatur-Vakuum-Wechselprozess beschrieben. Amin-basierte Chemisorbenten neigen häufig zu Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Während der Desorption wird Dampf eingeleitet, sodass der Restsauerstoff verdrängt wird und damit eine Schädigung des Materials durch Degradation verhindert werden soll. Bevor das System nach Beendigung der Desorptionsphase wieder in die Adsorptionsphase geht (also in die Aufnahme von CO₂), indem das Sorbentmaterial mit Luft in Kontakt gebracht wird, wird dieses auf ca. 50 °C heruntergekühlt. Dies bedeutet einen zusätzlichen Prozessschritt, welcher die zeitliche und energetische Effizienz des Systems reduzieren kann.

In der WO2022/109746A1 wird ein Verfahren zur Gewinnung von Kohlendioxid unter Verwendung von Physisorbenten im Einsatzgebiet von polaren (kalten, trockenen) Regionen beschrieben, da diese Materialien vorzugsweise Wasser aus der Umgebungslauft aufnehmen.

Bei der Verwendung von Physisorbenten gibt es den Ansatz, das Einsatzgebiet eines solchen Systems auf polare Regionen der Erde zu begrenzen, weil dort aufgrund der geringen Temperaturen die Luft im Vergleich zu gemäßigten, subtropischen oder tropischen Klimazonen weniger Wasser enthält. Auf eine technische Vortrocknung kann dennoch nicht ganz verzichtet werden, weil nicht sichergestellt ist, dass im Jahresverlauf durchgängig eine Taupunkttemperatur von beispielsweise -40 oder -60 °C vorliegt. Weiterhin ist der Aufwand der Installation und des Betriebs einer Anlage in polaren Regionen enorm im Vergleich zu erschlossenen Regionen der Erde.

Knox et al., Investigation of Desiccants and CO₂ Sorbents for Exploration Systems 2016-2017, ICES-2017-188 offenbaren den Einsatz von Physisorbenten zur Abtrennung von CO₂ aus der Kabinenlauft von Raumschiffen und Raumstationen. Hier findet man einen sogenannten Four Bed Molecular Sieve Ansatz, der eine Verschaltung von Modulen zur Vortrocknung der Kabinenluft und zur CO₂-Abtrennung vorsieht.

WO2021/206564 A1 beschreibt ein Verfahren zur Isolation von Kohlendioxid aus einem Gasgemisch.

EP1142623A2 offenbart einen Temperatur-Vakuum-Wechselprozess zur Isolation von Kohlendioxid aus einem feuchten heißen Gasgemisch.

US2010251887A1 beschreibt ein Verfahren zur Isolation von Kohlendioxid aus einem Gasgemisch umfassend eine Temperaturwechsel-Adsorptions-Schritt.

WO2014/012966A1 offenbart eine Vorrichtung für eine Adsorption-Desorption-Wechselreaktion.

Ein Sorptionsrad zur Entfeuchtung von Gasen wird beispielsweise in der DE 19703794 A1 beschrieben.

In den aufgeführten Verfahren bzw. Vorrichtungen erfolgt die Gewinnung von Kohlendioxid in der Regel in einem Batchprozess, sodass kein kontinuierlicher Kohlendioxid erhalten wird.

Aufgabe der vorliegenden Erfindung ist es, eine Vorrichtung zur Gewinnung von Kohlendioxid aus einem gasförmigen Medium, sowie ein Verfahren zur Gewinnung von Kohlendioxid aus einem gasförmigen Medium bereitzustellen, die bzw. das die oben genannten Nachteile wenigstens teilweise überwindet.

Diese Aufgabe wird durch die erfindungsgemäße Vorrichtung nach Anspruch 1, das erfindungsgemäße Verfahren nach Anspruch 12 und die erfindungsgemäße Verwendung nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Eine erfindungsgemäße Vorrichtung zur Gewinnung von Kohlendioxid aus einem gasförmigen Medium umfassend:
- einen ersten Luftströmungskanal für ein getrocknetes gasförmige Medium,
- einen zweiten Luftströmungskanal für Abluft,
- mindestens eine rotierbare Sorptionseinheit umfassend mindestens ein Sorptionsmittel zur Physisorption von Kohlendioxid,
wobei die mindestens eine rotierbare Sorptionseinheit von dem ersten Luftströmungskanal angesteuert wird und der zweite Luftströmungskanal die Abluft aus der rotierenden Sorptionseinheit abführt.

Bei dem gasförmigen Medium kann es sich um Atmosphäre, Umgebungsluft, Abgase, z. B. aus Industrieanlagen, Gasmischungen, Punktquellen, etc. handeln. Das gasförmige Medium umfasst unter anderem Kohlendioxid (CO₂).

Unter einem getrockneten gasförmigen Medium versteht man ein gasförmiges Medium, bei dem Feuchtigkeitsanteil, d.h. der Wasser-Anteil, höchstens 0,18%, vorzugweise höchstens 0,03%, noch weiter bevorzugt höchstens 0,001% beträgt.

Die erfindungsgemäße Vorrichtung weist einen ersten Luftströmungskanal für das getrocknete gasförmige Medium auf.

Die erfindungsgemäße Vorrichtung weist zudem einen zweiten Luftströmungskanal für Abluft auf. Bei der Abluft handelt es sich vorzugweise um ein getrocknetes gasförmiges Medium dem Kohlendioxid entzogen wurde.

Der Kohlendioxid-Anteil in der Abluft kann höchstens 100 ppm, vorzugsweise höchstens 50 ppm, noch weiter bevorzugt höchstens 10 ppm betragen.

Ferner weist eine erfindungsgemäße Vorrichtung mindestens eine rotierbare Sorptionseinheit umfassend mindestens ein Sorptionsmittel zur Physisorption von Kohlendioxid auf, wobei die mindestens eine rotierbare Sorptionseinheit von dem ersten Luftströmungskanal angesteuert wird und der zweite Luftströmungskanal die Abluft aus der rotierenden Sorptionseinheit abführt.

Die mindestens eine rotierbare Sorptionseinheit kann axial rotierend antreibbar sein und der erste Luftströmungskanal radial die mindestens eine rotierbare Sorptionseinheit ansteuern.

Bei der rotierbaren Sorptionseinheit handelt es sich vorzugsweise um ein Sorptionsrad bzw. einen Sorptionswärmetauscher. Ein Sorptionsrad ist ein radförmiges Bauteil, das an der Außenseite mit einem Sorptionsmittel beschichtet ist. Das Sorptionsrad bzw. der Sorptionswärmetauscher kann rotieren und von einem Medium angeströmt werden, aus dem mittels des Sorptionsmittels ein bestimmter Stoff sorbiert werden kann.

In einer Ausführungsform umfasst eine erfindungsgemäße Vorrichtung eine rotierbare Sorptionseinheit. In einer weiteren Ausführungsform umfasst eine erfindungsgemäße Vorrichtung mindestens zwei rotierbare Sorptionseinheiten.

Je nach Anforderung an die CO₂-Produktqualität (Reinheit) für zum Beispiel einen bestimmten Folgeprozess ist es auch denkbar die CO₂-Adsorption auf zwei Sorptionseinheiten zu begrenzen, sodass ein Produktstrom mit einer CO₂-Reinheit von ca. 75% bereitgestellt werden kann.

Es ist auch denkbar die CO₂-freie Abluft nach der CO₂-Adsorption aus zwei rotierbaren Sorptionseinheiten zusätzlich für die Regeneration der ersten Trocknungseinheit (z. B. die Vortrocknung) einzusetzen, sodass für die Regeneration der Trocknungseinheit (z. B. der Vortrocknung) dann mindestens 80%, vorzugsweise mindestens 85%, weiter bevorzugt mindestens 90% trockenes gasförmiges Medium zur Verfügung stehen.

Die mindestens eine rotierbare Sorptionseinheit kann axial rotierend antreibbar sein, d.h. sie kann um ihre eigene Achse rotieren. Der erste Luftströmungskanal kann die mindestens eine rotierbare Trocknungseinheit radial ansteuern. Die Durchströmungsrichtung des gasförmigen Mediums kann somit radial verlaufen. Die Durchströmungsrichtung der Prozess- und Regenerationsluft kann radial verlaufen.

Das Sorptionsmittel zur Physisorption von Kohlendioxid ist vorzugsweise an der gesamten rotierbaren Sorptionseinheit angeordnet, sodass der erste Luftströmungskanal direkt das Sorptionsmittel ansteuert und das getrocknete gasförmige Medium, das durch den ersten Luftströmungskanal fließt, direkt mit dem Sorptionsmittel in Kontakt kommt.

Durch die Rotation der rotierbaren Sorptionseinheit kommt ein Teil der rotierbaren Sorptionseinheit in Kontakt mit dem getrockneten gasförmigen Medium und das Sorptionsmittel an dem Teil der rotierbaren Sorptionseinheit kann das Kohlendioxid in dem gasförmigen Medium zumindest teilweise aufnehmen. Durch die Rotation bewegt sich die rotierbare Sorptionseinheit weiter und der mit Kohlendioxid benetzte Teil des Sorptionsmittels kann sich zu einem Bereich weiter bewegen, in dem das Kohlendioxid vom Sorptionsmittel wieder desorbiert werden kann. Durch die Weiterrotation kann das vom Kohlendioxid befreite Sorptionsmittel wieder eingesetzt werden, um Kohlendioxid aus dem getrockneten gasförmigen Medium abzutrennen. Aus der rotierbaren Sorptionseinheit kann so getrocknetes gasförmiges Medium mit einem geringeren Kohlendioxidgehalt austreten.

Bei dem Teil der rotierbaren Sorptionseinheit, der in Kontakt mit dem getrockneten gasförmigen Medium kommt, kann es sich um bis zu 50% der Umfangsfläche handeln, vorzugsweise um bis zu 45% der Umfangsfläche, weiter bevorzugt um bis zu 40% der Umfangsfläche handeln.

In einer Ausführungsform umfasst eine erfindungsgemäße Vorrichtung einen dritten Luftströmungskanal, wobei der dritte Luftströmungskanal die rotierbare Sorptionseinheit ansteuert.

Durch den dritten Luftströmungskanal kann Regenerationsluft geleitet werden und die rotierbare Sorptionseinheit ansteuern. Vorzugsweise steuert der dritte Luftströmungskanal die rotierbare Sorptionseinheit radial an.

Sofern ein dritter Luftströmungskanal vorhanden ist, kann es sich bei dem Teil der rotierbaren Sorptionseinheit, der in Kontakt mit dem getrockneten gasförmigen Medium kommt, sich um bis zu 20% der Umfangsfläche handeln, vorzugsweise um bis zu 15% der Umfangsfläche, weiter bevorzugt um bis zu 10% der Umfangsfläche handeln.

Es können der erste Luftströmungskanal, der zweite Luftströmungskanal und der der dritte Luftströmungskanal vorhanden sein. Im ersten Luftströmungskanal kann die zu trocknende Luft sein. Der Flächenanteil der rotierbaren Sorptionseinheit, der vom ersten Luftströmungskanal angeströmt wird, kann 50%, vorzugsweise 45%, noch weiter bevorzugt 40% betragen. Im zweiten Luftströmungskanal kann die Regenerationsluft sein. Der Flächenanteil der rotierbaren Sorptionseinheit, der vom zweiten Luftströmungskanal angeströmt wird, kann 50%, vorzugsweise 45%, noch weiter bevorzugt 40% betragen. Der dritte Luftströmungskanal kann den Kühl-Heiz-Kreislauf umfassen. Der Flächenanteil der rotierbaren Sorptionseinheit, der vom dritten Luftströmungskanal angeströmt wird, kann 20%, vorzugsweise 15%, noch weiter bevorzugt 10% betragen. Die Summe der Flächen der rotierbaren Sorptionseinheit, die von dem ersten, dem zweiten und dem dritten Luftströmungskanal angeströmt wird, beträgt 100%.

Bei der Regenerationsluft kann es sich um getrocknetes gasförmiges Medium handeln, welches Kohlendioxid entzogen oder angereicht wurde. Der Kohlendioxid-Anteil kann 50 %, vorzugsweise 60%, weiter bevorzugt 75% betragen. Der Kohlendioxid-Anteil ist vorzugsweise abhängig von der rotierbaren Sorptionseinheit. Sind in einer Vorrichtung mehrere rotierbaren Sorptionseinheiten vorhanden, so ist der Kohlendioxid-Anteil vorzugsweise abhängig welche der rotierbaren Sorptionseinheiten angesteuert wird. Vorzugsweise weist die Regenationsluft eine erhöhte Temperatur, d.h. eine Temperatur größer als 120 °C, vorzugsweise größer 200 °C, noch weiter bevorzugt größer 250 °C auf. Die erhöhte Temperatur kann durch einen Heizer erreicht werden.

In einer Ausführungsform kann die rotierbare Sorptionseinheit mindestens einen Heiz-Kühl-Kreislauf umfassen. Durch den Heiz-Kühl-Kreislauf kann kühleres gasförmiges Medium austreten und zum Kühlen der rotierbaren Sorptionseinheit verwendet werden und das so angewärmte gasförmige Medium kann wiederum zum Vorwärmen der rotierbaren Sorptionseinheit eingesetzt werden.

Das gasförmige Medium, das durch den Heiz-Kühl-Kreislauf ist vorzugsweise getrocknete Luft. Der Kohlendioxid-Gehalt der getrockneten Luft ist vorzugsweise abhängig von der rotierbaren Sorptionseinheit die gekühlt oder vorgewärmt werden soll.

Die rotierbare Sorptionseinheit kann ein Sorptionsmittel zur Physisorption von Kohlendioxid aufweisen. In einer weiteren Ausführungsform kann die rotierbare Sorptionseinheit mindestens zwei Sorptionsmittel zur Sorption von Kohlendioxid aufweisen. Beispielsweise kann die rotierbare Sorptionseinheit zwei Sorptionsmittel zur Sorption von Kohlendioxid, drei Sorptionsmittel zur Sorption von Kohlendioxid, oder vier Sorptionsmittel zur Sorption von Kohlendioxid aufweisen.

Sollten mehr als zwei Sorptionsmittel zur Physisorption eingesetzt werden, sei es in einer rotierbaren Sorptionseinheit, oder - sofern vorhanden - in mehreren rotierbaren Sorptionseinheiten, so sind diese vorzugsweise aufeinander abgestimmt. So kann es sein, dass das Sorptionsmittel in der rotierbaren Sorptionseinheit, mit dem das getrocknete gasförmige Medium als erstes in Kontakt tritt, weniger sensitiv auf Kohlendioxid reagiert, als das, oder die weiteren Sorptionsmittel mit denen das getrocknete gasförmige Sorptionsmittel in Kontakt tritt.

Sofern zwei Sorptionsmittel zur Physisorption von Kohlendioxid in einer rotierbaren Sorptionseinheit vorhanden sind, können diese im Verhältnis 90:10, vorzugsweise 80:20, weiter bevorzugt im Verhältnis 70:30 vorliegen.

Sofern drei Sorptionsmittel zur Physisorption von Kohlendioxid in einer rotierbaren Sorptionseinheit vorhanden sind, können diese im Verhältnis 90:5:5, vorzugsweise 80:10:10, weiter bevorzugt im Verhältnis 70:15:15 vorliegen.

In einer Ausführungsform kann das mindestens eine Sorptionsmittel zur Physisorption von Kohlendioxid ausgewählt sein aus der Gruppe bestehend aus Zeolith, Alumosilikat, MOF (Metal Organic Framework), Aktivkohle und ein mit Sorptionsmittel beschichteter Monolith.

Vorzugsweise ist das mindestens eine Sorptionsmittel zur Physisorption von Kohlendioxid Zeolith, insbesondere 13X-Zeolith.

Eine erfindungsgemäße Vorrichtung kann eine rotierbare Sorptionseinheit zur Physisorption von Kohlendioxid aufweisen. Alternativ kann eine erfindungsgemäße Vorrichtung mindestens zwei rotierbare Sorptionseinheiten aufweisen. Beispielsweise kann eine erfindungsgemäße Vorrichtung zwei rotierbare Sorptionseinheiten zur Physisorption von Kohlendioxid, drei rotierbare Sorptionseinheiten zur Physisorption von Kohlendioxid, oder vier rotierbare Sorptionseinheiten zur Physisorption von Kohlendioxid aufweisen.

Eine erfindungsgemäße Vorrichtung kann neben mindestens einer rotierbaren Sorptionseinheit auch mindestens eine herkömmliche Sorptionseinheit zur Physisorption von Kohlendioxid aufweisen.

In einer Ausführungsform kann eine erfindungsgemäße Vorrichtung ferner mindestes eine Trocknungseinheit umfassen. Bei der mindestens einen Trocknungseinheit kann es sich um mindestens eine rotierbare Trocknungseinheit handeln.

Die Trocknungseinheit wird vorzugsweise vom gasförmigen Medium angesteuert und das gasförmige Medium in der Trocknungseinheit getrocknet. Alternativ kann auch ein bereits vorgetrocknetes gasförmiges Medium die Trocknungseinheit ansteuern. In der Trocknungseinheit kann bei Einsatz eines vorgetrockneten gasförmigen Mediums eine Feintrocknung des gasförmigen Medium stattfinden.

Bei einer rotierbaren Trocknungseinheit handelt es sich vorzugsweise um ein Sorptionsrad bzw. einen Sorptionswärmetauscher. Ein Sorptionsrad kann auch als Sorptionsrotor hierin bezeichnet werden. Ein Sorptionsrad ist ein radförmiges Bauteil, das an der Außenseite mit einem Sorptionsmittel beschichtet ist. Das Sorptionsrad bzw. der Sorptionswärmetauscher kann rotieren und von einem Medium angeströmt werden, aus dem mittels des Sorptionsmittels ein bestimmter Stoff sorbiert werden kann.

Sofern es sich bei den Sorptionseinheiten um Sorptionsrotoren handelt, können sich diese mit einer Drehzahl von bis zu 10 Umdrehungen pro Minute drehen.

In einer Ausführungsform umfasst eine erfindungsgemäße Vorrichtung eine rotierbare Trocknungseinheit. In einer weiteren Ausführungsform umfasst eine erfindungsgemäße Vorrichtung mindestens zwei rotierbare Trocknungseinheiten.

Die mindestens eine rotierbare Trocknungseinheit ist axial rotierend antreibbar, d.h. sie rotiert um ihre eigene Achse. Die Durchströmungsrichtung des gasförmigen Mediums verläuft vorzugsweise radial. Die Durchströmungsrichtung der Prozess- und Regenerationsluft verläuft somit vorzugsweise radial.

In einer Ausführungsform kann die mindestens eine Trocknungseinheit mindestens ein Sorptionsmittel zur Sorption von Wasser umfassen.

Das Sorptionsmittel zur Sorption von Wasser kann ausgewählt sein aus der Gruppe bestehend aus Zeolith, Graphit, Alumosilikat, MOF (Metal Organic Framework), Silicagel, und ein mit Sorptionsmittel beschichteter Monolith.

Vorzugsweise ist das Sorptionsmittel zur Sorption von Wasser Silicagel und/oder Zeolith, beispielsweise 13X-Zeolith.

Das Sorptionsmittel zur Physisorption von Wasser ist vorzugsweise an der Umfangsfläche der (rotierbaren) Trocknungseinheit angeordnet, sodass das gasförmige Medium direkt mit dem Sorptionsmittel in Kontakt kommt.

Bei einer rotierbaren Trocknungseinheit kommt durch die Rotation der rotierbaren Trocknungseinheit ein Teil der rotierbaren Trocknungseinheit in Kontakt mit dem gasförmigen Medium und das Sorptionsmittel an dem Teil der rotierbaren Trocknungseinheit kann die Feuchtigkeit, d.h. das Wasser in dem gasförmigen Medium zumindest teilweise aufnehmen. Durch die Rotation bewegt sich die rotierbare Trocknungseinheit weiter und der mit Feuchtigkeit benetzte Teil des Sorptionsmittels kann sich zu einem Bereich weiter bewegen, in dem das Sorptionsmittel getrocknet werden kann. Durch die Weiterrotation kann das getrocknete Sorptionsmittel wieder eingesetzt werden, um gasförmiges Medium zu trocknen. Aus der rotierbaren Trocknungseinheit kann so vorgetrocknetes gasförmiges Medium austreten.

Bei dem Teil der rotierbaren Trocknungseinheit, der in Kontakt mit dem gasförmigen Medium kommt, kann es sich um bis zu 50% der Umfangsfläche handeln, vorzugsweise um bis zu 45% der Umfangsfläche, weiter bevorzugt um bis zu 40% der Umfangsfläche handeln.

Die Anordnung mit einer radialen Durchströmungsrichtung ist vorteilhaft, weil im äußeren radialen Bereich der Umfangsfläche auf der Trocknungsseite ein höherer Wasserpartialdruck vorliegt und damit bei niedrigerer Strömungsgeschwindigkeit die Adsorption der Feuchtigkeit, d.h. des Wassers des gasförmigen Mediums gut funktioniert. Bei kleiner werdendem Radius sinkt der Wasserpartialdruck durch die fortschreitende Wasseradsorption. Gleichzeitig wird die Strömungsgeschwindigkeit erhöht, so dass die Kinetik der Adsorption unterstützt wird und damit auch bei kleineren Wasserpartialdrücken eine gute Trocknungswirkung erzielt wird.

Liegen mindestens zwei Sorptionsmittel vor, so kann es sich um eine Kombination aus einem Silicagel und Zeolith handeln. Vorzugsweise kann durch ein Sorptionsmittel eine Grobtrocknung des gasförmigen Mediums und durch das zweite Sorptionsmittel eine Feintrocknung des gasförmigen Mediums stattfinden.

Auch bei dieser Anordnung der radialen Luftführung und somit radialen Anströmung der mindestens einen Trocknungseinheit ist ein bestimmtes Beschichtungsmuster anwendbar. Im äußeren radialen Bereich ist ein Sorptionsmittel zur groben Trocknung vorteilhaft (z.B. Silicagel), im inneren radialen Bereich ist ein Sorptionsmittel zur feinen Trocknung vorteilhaft (z.B. Zeolith).

Eine Kombination aus mindestens zwei Sorptionsmitteln, d.h. mindestens zwei Beschichtungen z. B. bei der rotierbaren Trocknungseinheit ist vorteilhaft, da es das gasförmige Medium auf einen noch niedrigeren Taupunkt trocknen kann im Vergleich zu z. B. einer rotierbaren Trocknungseinheit mit nur einer Art von Beschichtung an Sorptionsmittel. Die Aufteilung zwischen der ersten und der zweiten Beschichtung erfolgt vorzugsweise im Verhältnis 70% / 30% bis 90% / 10%, weiter bevorzugt im Bereich von 75% / 25% bis 80% / 20%.

Eine erfindungsgemäße Vorrichtung kann mindestens eine Vorkonditioniereinheit aufweisen. Eine Vorkonditioniereinheit ist ein Bauteil mittels dessen das gasförmige Medium in geeigneter Form dem/den weiteren Bauteil/en, wie der mindestens einen Trocknungseinheit, z. B. einer rotierbaren Trocknungseinheit, zugeführt werden kann. Eine Vorkonditioniereinheit kann beispielweise das gasförmige Medium auf eine definierte Temperatur kühlen, oder erhitzen. Eine Vorkonditioniereinheit kann das gasförmige Medium mittels Druck zusätzlich, oder alternativ zum Einstellen der Temperatur komprimieren, oder expandieren.

Durch den Einsatz einer Vorkonditioniereinheit kann eine erfindungsgemäße Vorrichtung auch für unterschiedliche klimatische Bedingungen (z. B. höhere H₂O-Gehalte in der Umgebungsluft bei höherer Temperatur- und/ oder Luftfeuchtigkeit) eingesetzt werden.

Bei der Vorkonditioniereinheit kann es sich um eine rotierbare Vorkonditioniereinheit handeln, die identisch, oder ähnlich zur mindestens einen Trocknungseinheit aufgebaut sein.

In einer Ausführungsform umfasst eine erfindungsgemäße Vorrichtung mindestens eine Trocknungseinheit, z. B. eine rotierbare Trocknungseinheit, und mindestens eine Sorptionseinheit.

In der Trocknungseinheit kann das vorgetrocknete gasförmige Medium auf einen bestimmten Feuchtigkeitsgehalt getrocknet werden. Die Trocknungseinheit weist vorzugsweise mindestens ein geeignetes Material auf, mittels dem bzw. denen der Feuchtigkeitsgehalt eingestellt werden kann. Das Material kann homogen in der Trocknungseinheit verteilt sein. Alternativ kann das Material auch schichtweise in der Trocknungseinheit verteilt sein. Insbesondere beim schichtweisen Aufbau der Trocknungseinheit kann die Trocknungseinheit einen Trocknungsgradienten aufweisen. Es kann also eine erste Schicht zu einer ersten Trocknung bis zu einem bestimmten Feuchtigkeitsgehalt führen. In der weiteren Schicht der Trocknungseinheit kann eine weitere Trocknung bis zu einem bestimmten Feuchtigkeitsgehalt stattfinden. Eine Trocknungseinheit kann beliebig viele Schichten aufweisen. Idealerweise sind die Schichten aufeinander abgestimmt.

Die Trocknungseinheit adsorbiert vorzugsweise 99,0 % (entspricht Taupunkt -40 °C nach Trocknungseinheit), weiter bevorzugt 99,7 % (Taupunkt -50 °C), noch weiter bevorzugt 99,9 % (Taupunkt -60 °C) der im gasförmigen Medium vorhandenen Menge H₂O.

Die Trocknungseinheit kann unabhängig von der Sorptionseinheit ausgebildet sein.

In einer Ausführungsform kann eine erfindungsgemäße Vorrichtung mindestens einen Kühler aufweisen.

Bei dem mindestens einen Kühler kann es sich um einen Zwischenkühler handeln.

Vorzugsweise ist ein Zwischenkühler nach der Trocknungseinheit angeordnet. Ein Zwischenkühler kann auch vor der Sorptionseinheit angeordnet sein. In einer Ausführungsform ist ein Zwischenkühler zwischen der Trocknungseinheit und der Sorptionseinheit angeordnet.

Ein Zwischenkühler kühlt das eintretende (gasförmige) Medium vorzugsweise auf eine definierte Temperatur herunter. Die Temperatur ist vorzugsweise <15°C, weiter bevorzugt <10°C, noch weiter bevorzugt <6°C. Insbesondere bevorzugt wird das eintretende (gasförmige) Medium auf eine Temperatur von 5°C gekühlt.

Mit zusätzlichen und/oder größeren Klimageräten könnte nach der Trocknungseinheit noch tiefer heruntergekühlt (z. B. auf -20 bis -40 °C) werden.

Eine erfindungsgemäße Vorrichtung kann mindestens eine Wärmetauschereinheit aufweisen. Die Wärmetauschereinheit kann insbesondere zur Wärmerückgewinnung dienen. Durch den Einsatz einer Wärmetauschereinheit kann der durch externe Energiequellen zugeführte Energiebedarf gesenkt werden und so die Energieeffizienz der Vorrichtung erhöht werden.

Die durch die Wärmetauschereinheit rückgewonnene Wärme kann beispielsweise für die Desorption von H₂O aus der Trocknungseinheit und/oder Kohlendioxid aus der Sorptionseinheit verwendet werden.

Der Energiebedarf der erfindungsgemäßen Vorrichtung kann weiter durch den Einsatz von mindestens einer Wärmepumpe gesenkt werden. Durch die Wärmepumpe kann die Energie für die Desorption in der Trocknungseinheit und/oder der Sorptionseinheit gewonnen werden. Die kalte Abluft der Wärmepumpe kann zur Kühlung z. B. in der Trocknungseinheit und/oder dem Zwischenkühler zur Kühlung eingesetzt werden.

Eine erfindungsgemäße Vorrichtung kann ferner mindestens eine Gebläsevorrichtung aufweisen. Das Gebläse kann dazu dienen das gasförmige Medium durch die Vorrichtung zu führen. Das Gebläse kann an der Eingangsseite und/oder der Ausgangsseite der Vorrichtung angeordnet sein. Ist das Gebläse an der Eingangsseite angeordnet, wird das gasförmige Medium in die Vorrichtung (beispielsweise in die Trocknungseinheit) gedrückt. Ist das Gebläse an der Ausgangsseite der Vorrichtung angeordnet, so wird durch den Sog, der durch das Gebläse entsteht, das gasförmige Medium durch die Vorrichtung gesogen.

Es können mehrere Gebläsevorrichtungen vorhanden sein oder nur eine Gebläsevorrichtung.

Für einen möglichst einfachen Aufbau kann versucht werden, auf mehrere Gebläse zu verzichten und die Luftstromaufteilung mittels variabler Drosseln einzustellen, solange der dafür zusätzlich entstehende Druckverlust vertretbar ist.

Die mindestens eine Trocknungseinheit und/oder die mindestens eine Sorptionseinheit können ebenfalls mindestens einen Physisorbenten bzw. mindestens ein Sorptionsmittel umfassen. Ein Physisorbent ist eine Verbindung, die durch physikalische Kräfte einen Stoff (z. B. ein Gas wie Kohlendioxid) an sich binden kann. Ein Physisorbent desorbiert idealerweise den adsorbierten Stoff unter kontrollierten Bedingungen. Dies kann beispielsweise durch Einwirken von Wärme, Druck, Anlagern von anderen Stoffen unter Abgabe des zuerst adsorbierten Stoffs, etc. geschehen.

Die verwendeten Physisorbenten sind vorzugsweise robust, alterungsbeständig und kommerziell in großem Maßstab verfügbar. Im Vergleich zu Chemisorbenten gibt es in der Regel keine Alterungs- oder Degradationserscheinungen im eingesetzten Temperaturbereich.

Bei dem Physisorbenten kann es sich um einen homogenen Stoff oder um eine Mischung handeln. Vorzugsweise handelt es sich bei dem mindestens einen Physisorbenten um einen Feststoff. Der mindestens eine Physisorbent kann ausgewählt sein aus der Gruppe bestehend aus Silicagel, Zeolith, Alumosilikat, MOF (Metal Organic Framework) und ein mit Sorptionsmaterial beschichteter Monolith.

Vorzugsweise weist die Trocknungseinheit einen schichtweisen Aufbau von Physisorbenten auf. In einer Ausführungsform weist die Trocknungseinheit mindestens eine Schicht Silicagel und mindestens eine Schicht Zeolith auf. Die mindestens eine Schicht Silicagel ist vorzugsweise im Einlassbereich der Trocknungseinheit angeordnet, sodass das Silicagel eine erste Trocknung durchführen kann. Das so getrocknete Medium wird anschließend durch die mindestens eine Zeolithschicht geführt, sodass eine weitere Trocknung des gasförmigen Mediums stattfinden kann.

In einer alternativen Ausführungsform der Trocknungseinheit umfasst diese mindestens eine Schicht Silicagel und mindestens zwei Schichten Zeolith. Im Einlassbereich der Trocknungseinheit kann eine Schicht aus Zeolith angeordnet werden, eine sogenannte Schutzschicht. Die Schutzschicht kann dazu dienen Verunreinigungen aus dem gasförmigen Medium zu entfernen, um so die folgenden Schichten zu schützen. An die Schutzschicht kann mindestens eine Schicht Silicagel angeordnet sein, sodass das Silicagel eine erste Trocknung durchführen kann. Das so vorgetrocknete Medium wird anschließend durch die mindestens eine Zeolithschicht geführt, sodass eine weitere Trocknung des vorgetrockneten Mediums stattfinden kann.

Das Verhältnis der ersten Schicht (z. B. Silicagel) und der zweiten Schicht (z. B. Zeolith) kann im Bereich zwischen 1,5 und 3,5, vorzugsweise im Bereich zwischen 2,0 und 3,0, weiter bevorzugt im Bereich zwischen 2,3 und 2,5 sein.

Idealerweise ist das Sorptionsmittel bzw. sind die Sorptionsmittel der Trocknungseinheit auf den bzw. die Physisorbenten der Trocknungseinheit abgestimmt.

Eine erfindungsgemäße Vorrichtung kann bei einem CO₂-Partialdruck im Bereich von ca. 380 bis 480 ppm, vorzugsweise im Bereich von 400 bis 450 ppm, insbesondere bevorzugt 420 ppm betrieben werden. Dafür ergibt sich ein abweichendes Verhältnis von CO₂- und H₂O-Partialdruck. Für die Anwendung unter atmosphärischen Bedingungen kann eine optimale Gestaltung der Schütthöhen der Adsorptionseinheiten vorteilhaft sein.

Vorzugsweise wird die Trocknung derart durchgeführt, dass das aus der Trocknungseinheit austretende Medium einen Feuchtigkeitsgehalt von 0,0196 % bis 0,007 % (Taupunkt -40 °C), vorzugsweise von 0,007 % bis 0,0022 % (Taupunkt -50 °C), weiter bevorzugt von 0,0022 % bis 0,0006 % (Taupunkt -60 °C) aufweist.

Ferner ist Gegenstand der vorliegenden Erfindung ein Verfahren zur Gewinnung von Kohlendioxid umfassend die Schritte:
- Bereitstellen eines getrockneten gasförmigen Mediums in einem ersten Luftströmungskanal,
- Adsorbieren von CO₂ aus dem getrockneten gasförmigen Medium in mindestens einer rotierbaren Sorptionseinheit und gleichzeitig Gewinnen von CO₂ durch Desorbieren von CO₂ in der mindestens einen rotierbaren Sorptionseinheit, wobei
die mindestens eine rotierbare Sorptionseinheit axial rotiert und der erste Luftströmungskanal die mindestens eine rotierbare Sorptionseinheit radial ansteuert.

Bei dem Verfahren kann es sich um ein sogenanntes Direct Air Capture (DAC)-Verfahren handeln. Bei einem DAC-Verfahren wird Kohlendioxid mittels einer geeigneten Vorrichtung aus Umgebungsluft gewonnen. Vorzugsweise wird bei einem Direct Air Capture Verfahren Kohlendioxid mittels eines geeigneten Feststoffsorbenten aus einem gasförmigen Medium, wie Atmosphärenluft, abgetrennt.

Vorzugsweise beruht das Verfahren ausschließlich auf kontinuierlich arbeitenden Sorptionseinheiten, sodass ein kontinuierlicher CO₂-Produktstrom geliefert werden kann.

Bei kontinuierlich arbeitenden Sorptionseinheiten ist die Umsetzung von Wärmerückgewinnungsmaßnahmen einfacher möglich. Es müssen vorzugsweise keine thermischen Speicher eingesetzt werden, welche die Wärme aus einer Batch-Kolonne aus einem heißen Zyklus speichern, um diese in einem späteren Prozessschritt in einer anderen und derselben Batch-Kolonne zu nutzen. Durch die kontinuierliche Betriebsweise müssen im Vergleich zu Verfahren, die im Batch-Betrieb arbeiten, keine Prozesse von einzelnen Adsorber-Kolonnen zyklisch aufeinander abgestimmt werden. Auch die Anpassung von Betriebsparametern bei sich ändernden Umgebungsbedingungen wäre damit einfacher möglich.

DAC-Verfahren, die auf zyklisch arbeitenden Batch-Kolonnen basieren, müssen in der Desorption ein Temperatur-Vakuum-Wechselprozess durchlaufen, um eine hohe CO₂-Reinheit im Produktstrom zu erreichen. Dies erfordert hohe Anforderungen an die Abdichtung der Bauteile und Baugruppen, um Leckageströme möglichst gering zu halten. Durch die Aneinanderreihung von mehreren kontinuierlich arbeitenden Stufen könnte die Desorption alleine über die Temperatur mit geringerem Aufwand realisiert werden.

Bei dem getrockneten gasförmigen Medium, dem ersten Luftströmungskanal und der rotierbaren Sorptionseinheit weisen vorzugsweise die jeweiligen Merkmale auf, wie hierin beschrieben.

Ein erfindungsgemäßes Verfahren umfasst unter anderem den Schritt des Bereitstellens eines getrockneten gasförmigen Mediums. Bei dem gasförmigen Medium handelt es sich vorzugsweise um Luft, die Kohlendioxid umfasst.

"Getrocknet" im Zusammenhang mit dem gasförmigen Medium bedeutet, dass der Feuchtigkeitsgehalt, also der Gehalt an H₂O, vorzugsweise kleiner 120 ppm, weiter bevorzugt kleiner 40 ppm, noch weiter bevorzugt kleiner 10 ppm ist.

In einer Ausführungsform umfasst ein erfindungsgemäßes Verfahren den Schritt des Vortrocknens des gasförmigen Mediums in einer Vortrocknungseinheit. Gasförmiges Medium, wie es hierin beschrieben ist, wird bei deinem derartigen Schritt durch eine Vortrocknungseinheit, wie hierin beschrieben, geführt. Bei der Vortrocknungseinheit kann es sich somit um einer rotierbare Vortrocknungseinheit handeln. Es ist auch möglich, dass in einem erfindungsgemäßen Verfahren gasförmiges Medium in mehr als einer Vortrocknungseinheit vorgetrocknet wird.

Ein vorgetrocknetes gasförmiges Medium weist vorzugsweise einen Feuchtigkeitsgehalt, d. h. einen H₂O-Gehalt, von kleiner 0,18%, weiter bevorzugt von kleiner 0,03%, noch weiter bevorzugt von kleiner 0,001%.

In einer weiteren Ausführungsform umfasst ein erfindungsgemäßes Verfahren den Schritt des Trocknens des vorgetrockneten gasförmigen Mediums in mindestens einer Trocknungseinheit. Bei der Trocknungseinheit handelt es sich vorzugsweise um eine Trocknungseinheit wie hierin beschrieben. Das vorgetrocknete Medium, das insbesondere aus der mindestens einen Vortrocknungseinheit geführt wird, wird direkt, oder über ein weiteres Bauteil, wie einen Kühler, in die mindestens eine Trocknungseinheit geführt. Bei der mindestens einen Trocknungseinheit handelt es sich vorzugsweise um eine rotierbare Trocknungseinheit, wie hierin beschrieben.

Bei der rotierbaren Trocknungseinheit kann es sich um ein Sorptionsrad, einen Sorptionsrotor bzw. einen Sorptionswärmetauscher handeln. Ein Sorptionsrad ist ein radförmiges Bauteil, das an der Außenseite mit einem Sorptionsmittel beschichtet ist. Das Sorptionsrad, der Sorptionsrotor bzw. der Sorptionswärmetauscher kann rotieren und von einem Medium angeströmt werden, aus dem mittels des Sorptionsmittels ein bestimmter Stoff sorbiert werden kann.

In einer Ausführungsform umfasst die rotierbare Trocknungseinheit mindestens ein Sorptionsmittel zur Adsorption von Wasser. Bei dem Sorptionsmittel kann es sich um die hierin genannten Sorptionsmittel handeln. Es kann ein Sorptionsmittel, oder eine Kombination von mindestens zwei Sorptionsmitteln vorliegen.

In einer Ausführungsform handelt es sich bei dem mindestens einen Sorptionsmittel um eine Kombination aus zwei Sorptionsmitteln. Bei den zwei Sorptionsmitteln kann es sich um eine erste Schicht aus Silicagel und eine zweite Schicht aus Zeolith handeln.

Das Trocknen kann durch mindestens ein geeignetes Material erfolgen, mittels dem bzw. denen der Feuchtigkeitsgehalt eingestellt werden kann. Das Material kann als homogenes Material vorliegen. Alternativ kann das Material auch schichtweise vorliegen. Insbesondere beim schichtweisen Vorliegen kann ein Trocknungsgradient vorliegen. Es kann also eine erste Schicht zu einer ersten Trocknung bis zu einem bestimmten Feuchtigkeitsgehalt führen. In der weiteren Schicht kann eine weitere Trocknung bis zu einem bestimmten Feuchtigkeitsgehalt stattfinden. Es können beliebig viele Schichten vorliegen. Idealerweise sind die Schichten aufeinander abgestimmt. Bei der bzw. den Schichten kann es sich um mindestens einen Physisorbenten, wie hierin beschrieben, handeln.

Während des Trocknens kann vorzugsweise 99,0 %, weiter bevorzugt 99,7 %, noch weiter bevorzugt 99,9 % der im gasförmigen Medium vorhandenen Menge H₂O adsorbiert werden.

Das Trocknen kann insbesondere dazu dienen, das bzw. die Sorptionsmittel der Sorptionseinheit zu schonen, vor allem dann, wenn das bzw. die feuchtigkeitsaffin sind.

Vorzugsweise wird das gasförmige Medium vor dem Trocknen konditioniert. Das Konditionieren wird insbesondere dazu verwendet das gasförmige Medium mit adäquater Temperatur und/oder adäquatem Druck dem Verfahren zuzuführen.

In einer Ausführungsform umfasst ein erfindungsgemäßes Verfahren ein Kühlen des gasförmigen Mediums vor dem Adsorbieren des CO₂. Das Kühlen des gasförmigen Mediums kann durch einen Zwischenkühler erfolgen. Alternativ sind auch andere Bauteile zum Temperieren des gasförmigen Mediums denkbar. Beispielsweise kann es sich um einen Luft-Wasser-Wärmetauscher handeln.

Das eintretende gasförmige Medium wird vorzugsweise auf eine definierte Temperatur heruntergekühlt. Die Temperatur ist vorzugsweise <15°C, weiter bevorzugt <10°C, noch weiter bevorzugt <6°C. Bevorzugt wird das eintretende gasförmige Medium auf eine Temperatur von 5°C gekühlt.

Ein erfindungsgemäßes Verfahren kann den Schritt der Wärmerückgewinnung, wie oben beschrieben umfassen.

Der Energiebedarf eines erfindungsgemäßen Verfahrens kann durch den Einsatz von mindestens einer Wärmepumpe, wie oben beschrieben, gesenkt werden.

In einer Ausführungsform umfasst ein erfindungsgemäßes Verfahren den Schritt des Transportierens des gasförmigen Mediums mittels Gebläse. Das Gebläse kann dem Gebläse einer erfindungsgemäßen Vorrichtung entsprechen.

Das Gebläse kann dazu dienen, das gasförmige Medium durch die Vorrichtung zu führen. Das Gebläse kann an der Eingangsseite und/oder der Ausgangsseite der Vorrichtung angeordnet sein. Ist das Gebläse an der Eingangsseite angeordnet, wird das gasförmige Medium in die Vorrichtung (beispielsweise in die Vorkonditioniereinheit) gedrückt. Ist das Gebläse an der Ausgangsseite der Vorrichtung angeordnet, so wird durch den Sog, der durch das Gebläse entsteht, das gasförmige Medium durch die Vorrichtung gesogen.

In einem erfindungsgemäßen Verfahren erfolgt das Desorbieren des adsorbierten CO₂ vorzugsweise durch Erwärmen. Dabei wird die Einheit, in der das CO₂ adsorbiert ist, auf eine definierte Temperatur erhitzt. Durch das Erhitzen wird das CO₂ aus der Einheit gelöst und kann vorzugsweise mit hoher Reinheit abgeführt werden.

Das CO₂ kann vorzugsweise in einer Reinheit von >80%, weiter bevorzugt in einer Reinheit von >90%, noch weiter bevorzugt in einer Reinheit von >95% aus der Vorrichtung bzw. dem Verfahren abgeführt werden. In manchen Ausführungsformen wird das CO₂ in einer Reinheit von >99% abgeführt.

Das Desorbieren des adsorbierten CO₂ kann durch Erwärmen auf eine Temperatur von >50°C, insbesondere >80°C, bevorzugt >120°C, weiter bevorzugt >200°C, noch weiter bevorzugt >250°C, erfolgen. Vorzugsweise ist in einem erfindungsgemäßen Verfahren kein Dampf für die Desorption des CO₂ erforderlich

Ein erfindungsgemäßes Verfahren kann ferner den Schritt des Kühlens des gasförmigen Mediums vor dem Adsorbieren des CO₂ umfassen. Das Kühlen kann mittels eines Zwischenkühlers, wie hierin beschrieben, erfolgen.

Ein erfindungsgemäßes Verfahren kann auch den Schritt des Führens von gasförmigem Medium durch einen Heiz-Kühl-Kreislauf umfassen. Durch den Heiz-Kühl-Kreislauf kann kühleres gasförmiges Medium austreten und z. B. zum Kühlen der rotierbaren Sorptionseinheit verwendet werden und das so angewärmte gasförmige Medium kann wiederum zum Vorwärmen der rotierbaren Sorptionseinheit eingesetzt werden.

Das gasförmige Medium, das durch den Heiz-Kühl-Kreislauf ist vorzugsweise getrocknete Luft. Der Kohlendioxid-Gehalt der getrockneten Luft ist vorzugsweise abhängig von der rotierbaren Sorptionseinheit die gekühlt oder vorgewärmt werden soll.

Ein erfindungsgemäßes Verfahren kann ferner den Schritt des Kühlens des gasförmigen Mediums vor dem Adsorbieren des CO₂ umfassen. Das Kühlen kann mittels eines Zwischenkühlers, wie hierin beschrieben, erfolgen.

Ein erfindungsgemäßes Verfahren weist vorzugsweise noch weitere Verfahrensschritte auf, wie sie auch schon für die Vorrichtung hierin beschrieben sind.

In einer Ausführungsform weist das erfindungsgemäße Verfahren im Wesentlichen zwei rotierbare Sorptionseinheiten für die Trocknung des angesaugten gasförmigen Mediums (z. B. Luft) und drei weitere rotierbare Sorptionseinheiten für die Entnahme und Aufkonzentration von CO₂ aus dem vorgetrockneten gasförmigen Medium (z. B. Luft) auf. Das eintretende gasförmige Medium (z. B. Luft, wie Umgebungsluft) kann in einer ersten Trocknungseinheit (z. B. einem ersten Sorptionsrad) vorgetrocknet. Damit wird dem gasförmigen Medium ein Großteil des Wasseranteils entzogen und das gasförmige Medium verlässt die erste Trocknungseinheit mit einem Taupunkt von ca. -10 °C. Für die Vortrocknung kann eine rotierbare Vortrocknungseinheit (z. B. ein Sorptionsrad) mit einer Funktionalisierung mit einem Sorptionsmittel (z. B. Silicagel) verwendet werden. Silicagel adsorbiert in einem weiten Partialdruckbereich H₂O sehr gut, lässt aber bei niedrigen Partialdrücken Wasser durch, sodass für die "Feintrocknung" des gasförmigen Mediums vorzugsweise eine weitere rotierbare Trocknungseinheit (z. B. ein Sorptionsrotor) eingesetzt wird, welcher mit einem Zeolith beschichtet ist, vorzugsweise mit einem 13X-Typ-Zeolith. Dieser ist in der Lage Wasser auch bei niedrigen Partialdrücken zu adsorbieren, so dass das gasförmige Medium mit einem Taupunkt von -60 °C die zweite Trocknungseinheit verlässt. Die Regeneration der ersten Trocknungseinheit erfolgt mit kalter, trockener Luft, wobei ca. 83 % des ursprünglich angesaugten Volumenstroms des gasförmigen Mediums für die Regeneration der ersten Trocknungseinheit eingesetzt werden. Die Regeneration der zweiten Trocknungseinheit erfolgt mit trockenem gasförmigen Medium bei ca. 120 °C. Damit kann eine weitgehend geringe Beladung mit H₂O am Ende der Desorption erreicht werden. Die geringe Restbeladung von ca. 2 % H₂O führt dazu, dass der Zeolith kein CO₂ in dieser Stufe adsorbieren kann. Das trockene und weiterhin CO₂-haltige gasförmige Medium wird auf eine erste CO₂-Stufe geleitet. Diese rotierbare Sorptionseinheit kann mit einem 13X-Typ-Zeolith beschichtet sein und das CO₂ und ggf. enthaltenes Restwasser aus dem gasförmigen Medium adsorbieren. Das austretende gasförmige Medium ist vorzugsweise H₂O- und CO₂-frei und kann für die Regeneration der beiden Trocknungseinheiten und der ersten CO₂-Sorptionseinheit verwendet werden. Die Regeneration der CO₂-Sorptionseinheit kann bei höheren Temperaturen von 250 bis 300 °C erfolgen, damit eventuell adsorbiertes Restwasser mit desorbiert wird und so eine erneute Aufnahme von CO₂ möglich wäre. Die Desorption kann unter einer geringfügig eingesetzten Spülluftmenge von ca. 2% des Ausgangsvolumenstromes erfolgen, um eine möglichst hohe CO₂-Konzentration aus der Desorption zu erhalten. Auf Grund der Lage der Adsorptionsisothermen von Zeolithen für CO₂ kann mit solch einer ersten CO₂-Stufe eine CO₂-Konzentration von ca. 3 % erreicht werden. Dieser erste, konzentrierte CO₂-Strom kann auf eine zweite CO₂-Sorptionseinheit geleitet werden, welche wiederum in der Desorption mit einem möglichst kleinem Spülluftstrom bei hoher Temperatur regeneriert werden kann - ca. 0,1 % des Ausgangsvolumenstroms. Dadurch kann eine CO₂-Konzentration im Desorptionsstrom von ca. 75 % erreicht werden. In einer dritten Stufe kann wiederum die Adsorption und Desorption nach dem gleichen Prinzip erfolgen, so dass ein CO₂-Produktstrom mit einer Konzentration von 95 bis 98 % dargestellt werden kann. Sofern es sich bei den Sorptionseinheiten um Sorptionsrotoren handelt, können sich diese mit einer Drehzahl von bis zu 10 Umdrehungen pro Minute drehen.

Ferner ist Gegenstand der vorliegenden Erfindung die Verwendung einer Vorrichtung, wie hierin beschrieben oder eines Verfahrens wie hierin beschrieben zur Gewinnung von Kohlendioxid aus einem gasförmigen Medium.

Ausführungsbeispiele der Erfindung werden nun beispielhaft und unter Bezugnahme auf die beigefügte Zeichnung beschrieben, in der:
Fig. 1 schematisch ein Ausführungsbeispiel einer rotierbaren Vortrocknungseinheit,
Fig. 2 schematisch ein Ausführungsbeispiel einer rotierbaren Sorptionseinheit,
Fig. 3 schematisch ein Ausführungsbeispiel eines erfindungsgemäßen Verfahrens,
Fig. 4 schematisch ein Ausführungsbeispiel eines erfindungsgemäßen Verfahrens,
Fig. 5 schematisch einen Ausschnitt eines Ausführungsbeispiels eines erfindungsgemäßen Verfahrens,
Fig. 6 schematisch ein erfindungsgemäßes Verfahren und
Fig. 7 die Adsorptionsisothermen von CO₂ bei einem mehrstufigen Sorptionsverfahren zeigen.

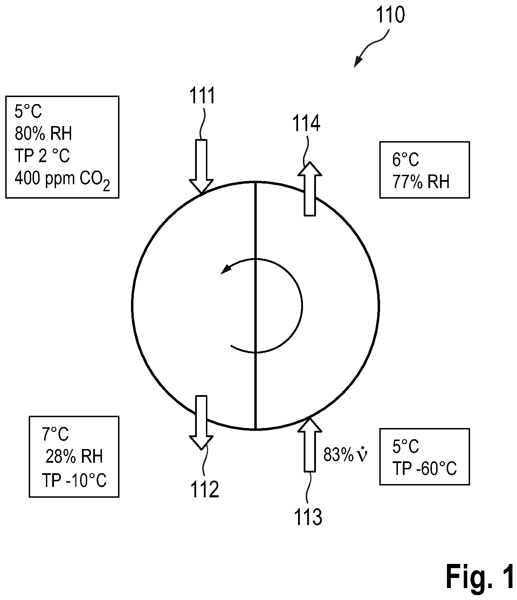

Ein Ausführungsbeispiel einer rotierbaren Vortrocknungseinheit 110 ist in Fig. 1 gezeigt. Am Lufteintritt 111 tritt gasförmiges Medium, beispielsweise Umgebungsluft mit einer Temperatur von 5°C, einer relativen Luftfeuchtigkeit von 80%, einem Taupunkt von 2°C und einem Gehalt an CO₂ von 400 ppm ein. Das getrocknete gasförmige Medium wird durch die rotierbare Vortrocknungseinheit 110 geführt und tritt als Luftaustritt 112 wieder aus. Das gasförmige Medium weist beispielsweise eine Temperatur von 7°C, eine relative Luftfeuchtigkeit von 28% auf und einen Taupunkt von -10°C. Parallel tritt Regenerationsluft 113 in die rotierbare Vortrocknungseinheit 110 ein. Die Regenerationsluft 113 kann eine Temperatur von 5°C und einen Taupunkt von -60°C aufweisen. Die Regenerationsluft 113 kann Feuchtigkeit und Wärme in der rotierbaren Vortrocknungseinheit 110 aufnehmen und als feuchte Abluft 114 wieder austreten. Die feuchte Abluft kann eine Temperatur von 6°C und eine relative Luftfeuchtigkeit von 77% aufweisen. Die Adsorption von Feuchtigkeit kann in der rotierbaren Vortrocknungseinheit 110 durch ein Sorptionsmittel, z. B. Silicagel, erfolgen. In einer alternativen Ausführungsform kann auch ein Heiz-Kühl-Kreislauf vorhanden sein. In Fig. 1 ist kein Heiz-Kühl-Kreislauf gezeigt, sodass es sich vorliegend um eine sogenannte kalte Regeneration handelt. Die Flächenaufteilung in der rotierbaren Vortrocknungseinheit 110 kann 50:50 betragen.

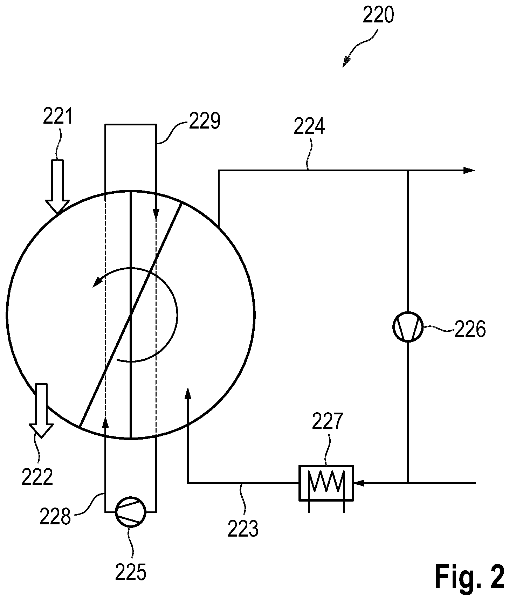

Fig. 2 zeigt ein Ausführungsbeispiel einer rotierbaren Sorptionseinheit 220. Am Lufteintritt 221 tritt getrocknetes gasförmiges Medium, beispielsweise getrocknete Umgebungsluft ein. Das getrocknete gasförmige Medium wird durch die rotierbare Sorptionseinheit 220 geführt und tritt als Luftaustritt 222 wieder aus. In der rotierbaren Sorptionseinheit 220 wird ein Stoff mittels eines geeigneten Sorptionsmittels sorbiert. In einer rotierbaren Sorptionseinheit 220 wird vorzugsweise Kohlendioxid sorbiert. Parallel tritt Regenerationsluft 223 in die rotierbare Sorptionseinheit 220 ein. Die Regenerationsluft 223 kann mittels eines Heizers 227 erwärmt werden. Die Regenerationsluft 223 kann Feuchtigkeit und Wärme in der rotierbaren Sorptionseinheit 220 aufnehmen und als 224 wieder austreten. In einem Heizkreislauf wird ein Teil der ausgetretenen Luft 224 wieder über den Heizer 227 als Regenerationsluft 223 über ein Gebläse 226 zurück geführt. Gemäß Fig. 2 weist die rotierbare Sorptionseinheit 220 einen Kühl-Heiz-Kreislauf auf, der über ein Gebläse 225 geführt wird. Durch den Kühl-Heiz-Kreislauf kann heiße Luft zum Vorwärmen 228 eintreten. Mittels der heißen Luft 228 kann die rotierbare Sorptionseinheit 220 vorgewärmt werden und so der sorbierte Stoff aus dem Sorptionsmittel abgetrennt werden. Nachdem die Luft des Kühl-Heiz-Kreislaufs die rotierbare Sorptionseinheit 220 passiert hat, tritt sie als kühlere Luft 229 zum Kühlen wieder aus. Durch das Vorhandensein des Kühl-Heiz-Kreislaufs kann die Regeneration der rotierbaren Sorptionseinheit 220 auch als warme oder heiße Regeneration bezeichnet werden. Die Flächenaufteilung in der rotierbaren Sorptionseinheit 220 kann wie durch die Striche gezeigt 43:7:43:7 betragen.

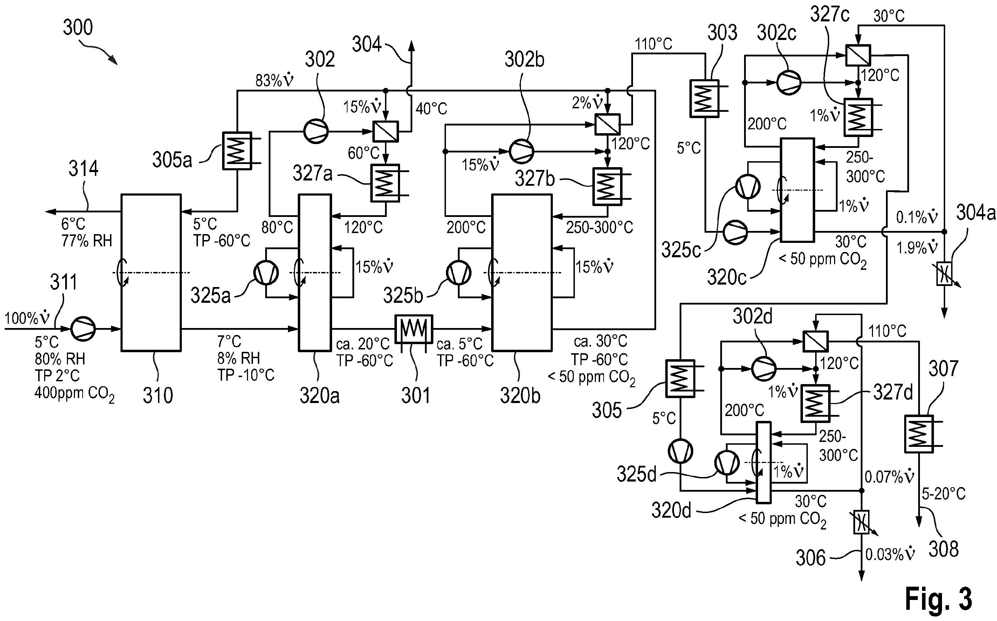

Fig. 3 zeigt schematisch eine Ausführungsform einer Vorrichtung zur Gewinnung von Kohlendioxid 300. Bei der Gewinnung von Kohlendioxid kann es sich um ein Direct Air Capture Verfahren (DAC-Verfahren) handeln. Die Vorrichtung basierend auf Physisorbenten umfasst im Wesentlichen eine Vortrocknungseinheit 310, hier ist eine rotierbare Vortrocknungseinheit gezeigt. Bei der Vortrocknungseinheit 310 kann es sich bei dem Sorptionsmittel zur Sorption von H₂O um Silicagel handeln. Wie bei Fig. 1 beschrieben, kann es sich bei der Regeneration um eine kalte Regeneration handeln. Luft 311 tritt mittels eines Gebläses in die Vortrocknungseinheit 310 ein. Die Luft kann eine Temperatur von 5°C, eine relative Luftfeuchtigkeit von 80%, einen Taupunkt von 2°C und einen Gehalt an CO₂ von 400ppm aufweisen. Aus der Vortrocknungseinheit 310 kann vorgetrocknete Luft mit einer Temperatur von 7°C, eine relativen Luftfeuchtigkeit von 28% und einem Taupunkt von -10°C austreten und in Trocknungseinheit 320a eintreten, hier ist eine rotierbare Trocknungseinheit gezeigt. In der Trocknungseinheit 320a kann eine Trocknung mittels Zeolith stattfinden und Luft mit einer Temperatur von 20°C und einem Taupunkt von -60°C austreten. Die Trocknungseinheit 320a kann einen Kühl-Heiz-Kreislauf mit einem Gebläse 325a aufweisen. Bei der Regeneration der Trocknungseinheit 320a kann es sich um eine warme Regeneration wie in Fig. 2 gezeigt, handeln. Die getrocknete Luft aus der Trocknungseinheit 320a wird über einen Kühler 301 in die rotierbare Sorptionseinheit 320b geleitet. In der rotierbaren Sorptionseinheit 320b wird das Kohlendioxid zumindest teilweise sorbiert und mit einer Temperatur von ca. 30°C, einem Taupunkt von -60°C und einem CO₂-Gehalt von weniger als 50 ppm aus der rotierbaren Sorptionseinheit 320b geführt. Die rotierbare Sorptionseinheit 320b weist zudem einen Kühl-Heiz-Kreislauf mit einem Gebläse 325b. Bei der Regeneration der rotierbaren Sorptionseinheit 320b kann es sich, wie in Fig. 2 gezeigt, um eine heiße Regeneration handeln. Die aus der rotierbaren Sorptionseinheit 320b austretende Luft kann über einen Kühler 305a zurück zur Vortrocknungseinheit 310 geführt werden, um dort das H₂O aus der Vortrocknung aufzunehmen und mit einer Temperatur von 6°C und einen relativen Luftfeuchtigkeit von 77% als feuchte Abluft 314 aus der Vorrichtung auszutreten. Alternativ kann die aus der Trocknungseinheit 320a austretende Luft, die vorher über den Wärmetauscher nach Gebläse 302 gegangen ist, direkt und ohne über einen Kühler geleitet zu werden als feuchte Abluft 304 aus der Vorrichtung austreten. Ein Teil der Luft, der aus der rotierbaren Sorptionseinheit 320b austritt kann auch über einen Heizer 327b und einem Heizkreislauf mit einem Gebläse 302b zurück geführt werden. Ein weiterer Teil der Luft kann auch über einen Heizer 327a geleitet werden und zur Regeneration der Trocknungseinheit 320a eingesetzt werden. Die Luft aus dem Heizkreislauf mit Gebläse 302b kann eine CO₂-Konzentration von ca. 3% aufweisen und über einen Kühler 303 zu einer weiteren rotierbaren Sorptionseinheit 320c führen. Die rotierbare Sorptionseinheit 320c weist zudem einen Kühl-Heiz-Kreislauf mit einem Gebläse 325c auf. Bei der Regeneration der rotierbaren Sorptionseinheit 320c kann es sich, wie in Fig. 2 gezeigt, um eine heiße Regeneration handeln. Der aus der rotierbaren Sorptionseinheit 320c austretende Luftstrom kann eine Temperatur von 30°C und einen CO₂-Gehalt von kleiner 50 ppm aufweisen. Ein Teil der austretenden Luft aus der rotierbaren Sorptionseinheit 320c kann über einen Heizkreislauf mit Gebläse 302c mit einem Heizer 327c geführt werden. Ein Teil der austretenden Luft aus der rotierbaren Sorptionseinheit 320c kann als Abluft 304a aus der Vorrichtung austreten. Ein anderer Teil der Luft aus der rotierbaren Sorptionseinheit 320c kann über einen Kühler 305 in eine weitere rotierbare Sorptionseinheit 320d geführt werden. Die rotierbare Sorptionseinheit 320d weist einen Kühl-Heiz-Kreislauf 325d auf. Bei der Regeneration der rotierbaren Sorptionseinheit 320d kann es sich, wie in Fig. 2 gezeigt, um eine heiße Regeneration handeln.

Die aus der rotierbaren Sorptionseinheit 320d austretende Luft kann eine Temperatur von 30°C und einen CO₂-Gehalt von kleiner 50 ppm aufweisen. Ein Teil der austretenden Luft aus der rotierbaren Sorptionseinheit 320d kann über einen Heizkreislauf mit Gebläse 302d mit einem Heizer 327d geführt werden. Ein Teil der austretenden Luft aus der rotierbaren Sorptionseinheit 320d kann als Abluft 306 aus der Vorrichtung austreten. Ein weiterer Teil der aus der rotierbaren Sorptionseinheit 320d austritt, kann über einen Kühler 307 geführt werden und der CO₂-Produktstrom 308 sein. Der CO₂-Produktstrom 308 kann einen CO₂-Gehalt von 95-98% aufweisen.

Es ist auch denkbar die CO₂-freie Abluft nach der CO₂-Adsorption aus zwei rotierbaren Sorptionseinheiten zusätzlich für die Regeneration der ersten Trocknungseinheit 310 (z. B. die Vortrocknung) eingesetzt werden, sodass für die Regeneration der Trocknungseinheit 310 (z. B. der Vortrocknung) dann (83 + 1,9 + 0,03) % = 84,93 % trockenes gasförmiges Medium zur Verfügung stehen Die Volumenstromanteile für die Regeneration, können wie folgt sein: 1,9 % ist die Abluft aus der der zweiten rotierbaren Sorptionseinheit 320c und 0,03 % ist die Abluft aus der der dritten rotierbaren Sorptionseinheit 320d.

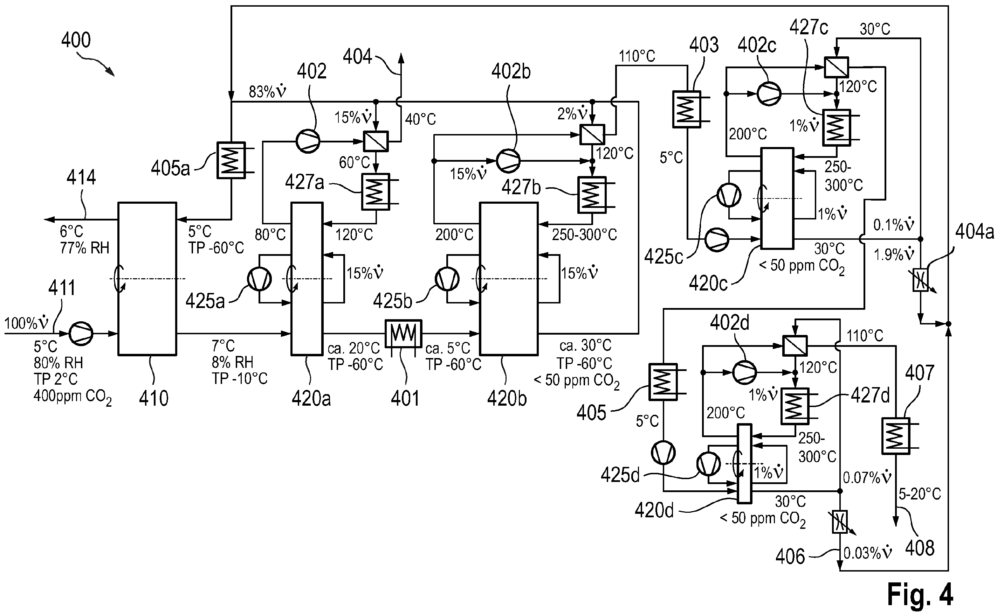

Fig. 4 zeigt schematisch eine weitere Ausführungsform einer Vorrichtung zur Gewinnung von Kohlendioxid 400. Bei der Gewinnung von Kohlendioxid kann es sich um ein Direct Air Capture Verfahren (DAC-Verfahren) handeln. Die Vorrichtung basierend auf Physisorbenten umfasst im Wesentlichen eine Vortrocknungseinheit 410, hier ist eine rotierbare Vortrocknungseinheit gezeigt. Bei der Vortrocknungseinheit 410 kann es sich bei dem Sorptionsmittel zur Sorption von H₂O um Silicagel handeln. Wie bei Fig. 1 beschrieben, kann es sich bei der Regeneration um eine kalte Regeneration handeln. Luft 411 tritt mittels eines Gebläses in die Vortrocknungseinheit 410 ein. Die Luft kann eine Temperatur von 5°C, eine relative Luftfeuchtigkeit von 80%, einen Taupunkt von 2°C und einen Gehalt an CO₂ von 400ppm aufweisen. Aus der Vortrocknungseinheit 410 kann vorgetrocknete Luft mit einer Temperatur von 7°C, eine relativen Luftfeuchtigkeit von 28% und einem Taupunkt von -10°C austreten und in Trocknungseinheit 420a eintreten, hier ist eine rotierbare Trocknungseinheit gezeigt. In der Trocknungseinheit 420a kann eine Trocknung mittels Zeolith stattfinden und Luft mit einer Temperatur von 20°C und einem Taupunkt von -60°C austreten. Die Trocknungseinheit 420a kann einen Kühl-Heiz-Kreislauf mit einem Gebläse 425a aufweisen. Bei der Regeneration der Trocknungseinheit 420a kann es sich um eine warme Regeneration wie in Fig. 2 gezeigt, handeln. Die getrocknete Luft aus der Trocknungseinheit 420a wird über einen Kühler 401 in die rotierbare Sorptionseinheit 420b geleitet. In der rotierbaren Sorptionseinheit 420b wird das Kohlendioxid zumindest teilweise sorbiert und mit einer Temperatur von ca. 30°C, einem Taupunkt von -60°C und einem CO₂-Gehalt von weniger als 50 ppm aus der rotierbaren Sorptionseinheit 420b geführt. Die rotierbare Sorptionseinheit 420b weist zudem einen Kühl-Heiz-Kreislauf mit einem Gebläse 425b. Bei der Regeneration der rotierbaren Sorptionseinheit 420b kann es sich, wie in Fig. 2 gezeigt, um eine heiße Regeneration handeln. Die aus der rotierbaren Sorptionseinheit 420b austretende Luft kann über einen Kühler 405a zurück zur Vortrocknungseinheit 410 geführt werden, um dort das H₂O aus der Vortrocknung aufzunehmen und mit einer Temperatur von 6°C und einen relativen Luftfeuchtigkeit von 77% als feuchte Abluft 414 aus der Vorrichtung auszutreten. Alternativ kann die aus der Trocknungseinheit 420a austretende Luft, die vorher über den Wärmetauscher nach Gebläse 402 gegangen ist, direkt und ohne über einen Kühler leitet zu werden als fechte Abluft 404 aus der Vorrichtung austreten. Ein Teil der Luft, der aus der rotierbaren Sorptionseinheit 420b austritt kann auch über einen Heizer 427b und einem Heizkreislauf mit einem Gebläse 402b zurück geführt werden. Ein weiterer Teil der Luft kann auch über einen Heizer 427a geleitet werden und zur Regeneration der Trocknungseinheit 420a eingesetzte werden. Die Luft aus dem Heizkreislauf mit einem Gebläse 402b kann eine CO₂-Konzentration von ca. 3% aufweisen und über einen Kühler 403 zu einer weiteren rotierbaren Sorptionseinheit 420c führen. Die rotierbare Sorptionseinheit 420c weist zudem einen Kühl-Heiz-Kreislauf mit einem Gebläse 425c auf. Bei der Regeneration der rotierbaren Sorptionseinheit 420c kann es sich, wie in Fig. 2 gezeigt, um eine heiße Regeneration handeln. Der aus der rotierbaren Sorptionseinheit 420c austretende Luftstrom kann eine Temperatur von 30°C und einen CO₂-Gehalt von kleiner 50 ppm aufweisen. Ein Teil der austretenden Luft aus der rotierbaren Sorptionseinheit 420c kann über einen Heizkreislauf mit Gebläse 402c mit einem Heizer 427c geführt werden. Ein Teil der austretenden Luft aus der rotierbaren Sorptionseinheit 420c kann als Abluft 404a aus der Vorrichtung austreten. Ein anderer Teil der Luft aus der rotierbaren Sorptionseinheit 420c kann über einen Kühler 405 in eine weitere rotierbaren Sorptionseinheit 420d geführt werden. Die rotierbare Sorptionseinheit 420d weist einen Kühl-Heiz-Kreislauf 425d auf. Bei der Regeneration der rotierbaren Sorptionseinheit 420d kann es sich, wie in Fig. 2 gezeigt, um eine heiße Regeneration handeln. Die aus der rotierbaren Sorptionseinheit 420d austretende Luft kann eine Temperatur von 30°C und einen CO₂-Gehalt von kleiner 50 ppm aufweisen. Ein Teil der austretenden Luft aus der rotierbaren Sorptionseinheit 420d kann über einen Heizkreislauf mit Gebläse 402d mit einem Heizer 427d geführt werden. Ein Teil der austretenden Luft aus der rotierbaren Sorptionseinheit 420d kann als Abluft 406 aus der Vorrichtung austreten. Ein weiterer Teil der aus der rotierbaren Sorptionseinheit 420d austritt, kann über einen Kühler 407 geführt werden und der CO₂-Produktstrom 408 sein. Der CO₂-Produktstrom 408 kann einen CO₂-Gehalt von 95-98% aufweisen. Die Abluft 404a bzw. 406 kann auch zur Regeneration der Vortrocknungseinheit 410 genutzt werden und über einen Kühler 407, der im CO₂-Produkstrom 408 angeordnet ist, zur Vortrocknungseinheit 410 geführt werden.

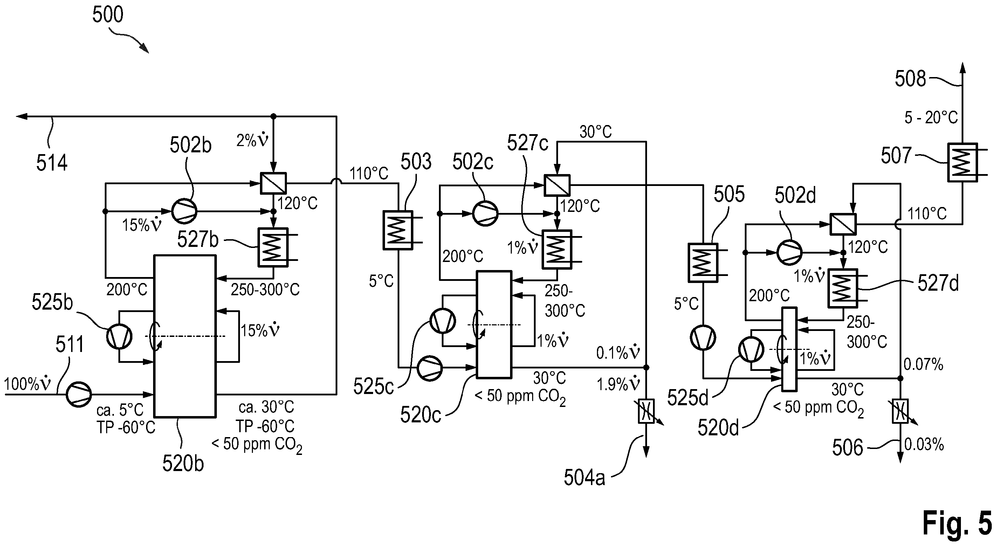

Fig. 5 zeigt einen schematischen Ausschnitt aus einer erfindungsgemäßen Vorrichtung 500. Im Gegensatz zu den Vorrichtungen aus Fig. 3 und Fig. 4 ist keine Vortrocknungseinheit und keine Trocknungseinheit gezeigt. In Fig. 5 tritt Luft 511 mit einer Temperatur von 5°C und einem Taupunkt von -60°C mittels eines Gebläses ein. Die Luft wird in die rotierbare Sorptionseinheit 520b geleitet. In der rotierbaren Sorptionseinheit 520b wird das Kohlendioxid zumindest teilweise sorbiert und mit einer Temperatur von ca. 30°C, einem Taupunkt von -60°C und einem CO₂-Gehalt von weniger als 50 ppm aus der rotierbaren Sorptionseinheit 520b geführt. Die rotierbare Sorptionseinheit 520b weist zudem einen Kühl-Heiz-Kreislauf mit einem Gebläse 525b auf. Bei der Regeneration der rotierbaren Sorptionseinheit 520b kann es sich, wie in Fig. 2 gezeigt, um eine heiße Regeneration handeln. Die aus der rotierbaren Sorptionseinheit 520b austretende Luft kann als Abluft 514 aus der Vorrichtung auszutreten. Ein Teil der Luft, der aus der rotierbaren Sorptionseinheit 520b austritt kann auch über einen Heizer 527b und einem Heizkreislauf mit Gebläse 502 zurück geführt werden. Die Luft aus dem Heizkreislauf mit Gebläse 502b kann eine CO₂-Konzentration von ca. 3% aufweisen und über einen Kühler 503 zu einer weiteren rotierbaren Sorptionseinheit 520c führen. Die rotierbare Sorptionseinheit 520c weist zudem einen Kühl-Heiz-Kreislauf mit Gebläse 525c auf. Bei der Regeneration der rotierbaren Sorptionseinheit 520c kann es sich, wie in Fig. 2 gezeigt, um eine heiße Regeneration handeln. Die aus der rotierbaren Sorptionseinheit 520c kann eine Temperatur von 30°C und einen CO₂-Gehalt von kleiner 50 ppm aufweisen. Ein Teil der austretenden Luft aus der rotierbaren Sorptionseinheit 520c kann über einen Heizkreislauf mit Gebläse 502c mit einem Heizer 527c geführt werden. Ein Teil der austretenden Luft aus der rotierbaren Sorptionseinheit 520c kann als Abluft 504a aus der Vorrichtung austreten. Ein anderer Teil der Luft aus der rotierbaren Sorptionseinheit 520c kann über einen Kühler 505 in eine weitere rotierbare Sorptionseinheit 520d geführt werden. Die rotierbare Sorptionseinheit 520d weist einen Kühl-Heiz-Kreislauf mit Gebläse 525d auf. Bei der Regeneration der rotierbaren Sorptionseinheit 520d kann es sich, wie in Fig. 2 gezeigt, um eine heiße Regeneration handeln. Die aus der rotierbaren Sorptionseinheit 520d austretende Luft kann eine Temperatur von 30°C und einen CO₂-Gehalt von kleiner 50 ppm aufweisen. Ein Teil der austretenden Luft aus der rotierbaren Sorptionseinheit 520d kann über einen Heizkreislauf mit Gebläse 502d mit einem Heizer 527d geführt werden. Ein Teil der austretenden Luft aus der rotierbaren Sorptionseinheit 520d kann als Abluft 506 aus der Vorrichtung austreten. Ein weiterer Teil der aus der rotierbaren Sorptionseinheit 520d austritt, kann über einen Kühler 507 geführt werden und der CO₂-Produktstrom 508 sein. Der CO₂-Produktstrom 508 kann einen CO₂-Gehalt von 95-98% aufweisen.

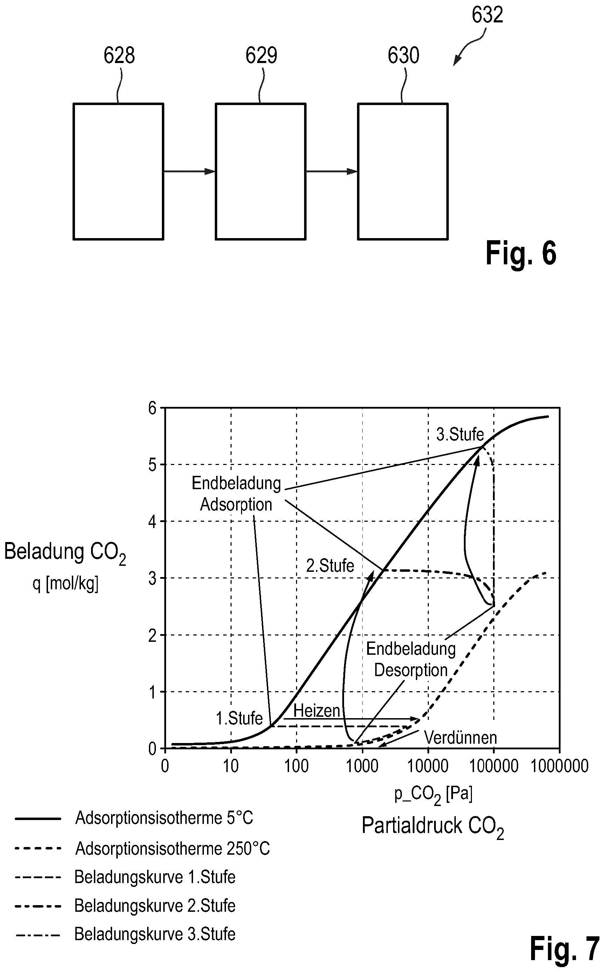

Fig. 6 zeigt schematisch ein erfindungsgemäßes Verfahren zur Gewinnung von Kohlendioxid 632. Zunächst wird getrocknetes gasförmiges Medium in einem ersten Luftströmungskanal bereitgestellt 628. Das getrocknete gasförmige Medium wird in eine rotierbare Sorptionseinheit überführt und dort das CO₂ adsorbiert 629, gleichzeitig wird durch Desorbieren von CO₂ in der rotierbaren Sorptionseinheit CO₂ gewonnen 630. Die rotierbare Sorptionseinheit rotiert dabei axial und der erste Luftströmungskanal steuert die rotierbare Sorptionseinheit radial an.

Fig. 7 zeigt die Adsorptionsisothermen von CO₂ bei einem mehrstufigen Sorptionsverfahren, wie z. B. in Fig. 3, Fig. 4 und Fig. 5 gezeigt. Auf der x-Achse ist der CO₂-Partialdruck gezeigt, während auf der y-Achse die Beladung mit CO₂ dargestellt ist.

### Bezugszeichenliste

110, 310, 410 rotierbare Vortrocknungseinheit
111, 311, 411, 511 Lufteintritt
112 Austritt Vortrocknung
113 Regenerationsluft
114, 314, 414 feuchte Abluft
514 Abluft
220 rotierbare Sorptionseinheit
221 Lufteintritt vorgetrocknete Luft
222 Luftaustritt nach Adsorption
223 Regenerationsluft Eintritt
224 Regenerationsluft Austritt
225 Gebläse im Kühl-Heiz-Kreislauf
226 Gebläse im Heizkreislauf
227 Heizer
228 Heißer Eintritt zum Vorwärmen
229 Kühlerer Austritt zum Kühlen
300, 400, 500 Vorrichtung
301, 401 Kühler
302a, 302b, 402a, 402b, 402c, 502b, 502c, 502d Gebläse im Heizkreislauf
320a, 420a H₂O-Adsorptionseinheit
320b, 320c, 320d, 420b, 420c, 420d, 520b, 520c, 520d CO₂-Adsorptionseinheit
325a, 325b, 325c, 325d, 425b, 425c, 425d, 525b, 525c, 525d Gebläse im Kühl-Heiz-Kreislauf
327b, 327c, 327d, 427b, 427c, 427d, 527b, 527c, 527d Heizer
303, 403, 503 Kühler
304, 304a, 404, 404a, 504, 504a Abluft
305, 305a, 405, 505 Kühler
306, 406, 506 Abluft
307, 407, 507 Kühler
308, 408, 508 CO₂-Produktstrom

## Patentansprüche

1. Vorrichtung (300, 400, 500) zur Gewinnung von Kohlendioxid aus einem gasförmigen Medium umfassend:
einen ersten Luftströmungskanal für ein getrocknetes gasförmige Medium,
einen zweiten Luftströmungskanal für Abluft,
mindestens eine rotierbare Sorptionseinheit (220) umfassend mindestens ein Sorptionsmittel zur Physisorption von Kohlendioxid,
wobei die mindestens eine rotierbare Sorptionseinheit (220) von dem ersten Luftströmungskanal angesteuert wird und der zweite Luftströmungskanal die Abluft aus der rotierenden Sorptionseinheit (220) abführt.

2. Vorrichtung (300, 400, 500) nach Anspruch 1, ferner umfassend einen dritten Luftströmungskanal, wobei der dritte Luftströmungskanal die rotierbare Sorptionseinheit (220) ansteuert.

3. Vorrichtung (300, 400, 500) nach Anspruch 1 oder Anspruch 2, wobei die rotierbare Sorptionseinheit (220) mindestens einen Heiz-Kühl-Kreislauf umfasst.

4. Vorrichtung (300, 400, 500) nach mindestens einem der Ansprüche 1 bis 3, wobei die rotierbare Sorptionseinheit (220) mindestens zwei Sorptionsmittel zur Sorption von Kohlendioxid umfasst.

5. Vorrichtung (300, 400, 500) nach mindestens einem der Ansprüche 1 bis 4, wobei das mindestens eine Sorptionsmittel ausgewählt ist aus der Gruppe bestehend aus Zeolith, Alumosilikat, MOF (Metal Organic Framework), Aktivkohle und ein mit Sorptionsmittel beschichteter Monolith.

6. Vorrichtung (300, 400, 500) nach mindestens einem der Ansprüche 1 bis 4, umfassend mindestens zwei rotierbare Sorptionseinheiten (220).

7. Vorrichtung (300, 400, 500) nach mindestens einem der Ansprüche 1 bis 5, ferner umfassend mindestes eine Trocknungseinheit (110, 310, 410, 320a, 420a).

8. Vorrichtung (300, 400, 500) nach Anspruch 6, wobei die mindestes eine Trocknungseinheit (110, 310, 410, 320a, 420a) eine rotierbare Trocknungseinheit ist.

9. Vorrichtung (300, 400, 500) nach Anspruch 6 oder Anspruch 7, wobei die mindestens eine Trocknungseinheit (110, 310, 410, 320a, 420a) mindestens ein Sorptionsmittel zur Sorption von Wasser umfasst.

10. Vorrichtung (300, 400, 500) nach Anspruch 8, wobei das Sorptionsmittel ausgewählt ist aus der Gruppe bestehend aus Zeolith, Graphit, Alumosilikat, MOF (Metal Organic Framework) und Silicagel.

11. Vorrichtung(300, 400, 500) nach mindestens einem der Ansprüche 1 bis 9, ferner umfassend mindestens einen Kühler (301, 401, 303, 403, 503, 305, 305a, 405, 505, 307, 407, 507).

12. Verfahren zur Gewinnung von Kohlendioxid umfassend die Schritte:
- Bereitstellen eines getrockneten gasförmigen Mediums in einem ersten Luftströmungskanal,
- Adsorbieren von CO₂ aus dem getrockneten gasförmigen Medium in mindestens einer rotierbaren Sorptionseinheit und gleichzeitig Gewinnen von CO₂ durch Desorbieren von CO₂ in der mindestens einen rotierbaren Sorptionseinheit, wobei die mindestens eine rotierbare Sorptionseinheit axial rotiert und der erste Luftströmungskanal die mindestens eine rotierbare Sorptionseinheit radial ansteuert.

13. Verfahren nach Anspruch 9, ferner umfassend den Schritt:
- Vortrocknen des gasförmigen Mediums in einer Vortrocknungseinheit (110, 310, 410).

14. Verfahren nach Anspruch 10, ferner umfassend den Schritt:
- Trocknen des vorgetrockneten gasförmigen Mediums in mindestens einer Trocknungseinheit (320a, 420a).

15. Verwendung einer Vorrichtung nach mindestens einem der Ansprüche 1 bis 11, oder eines Verfahrens nach Anspruch 12 bis 14 zur Gewinnung von Kohlendioxid aus einem gasförmigen Medium.
